# EUROPÄISCHE PATENTSCHRIFT

(11) **EP 3 363 280 B1**
(45) Veröffentlichungstag und Bekanntmachung des Hinweises auf die Patenterteilung: **10.03.2021**
(21) Anmeldenummer: 18152946.2
(22) Anmeldetag: 23.01.2018
(51) Int. Cl.: A01D 89/00, A01B 79/00, A01D 41/127, A01D 57/02, A01B 59/06, A01D 41/14, A01D 69/03

(54) **ANTRIEBSSYSTEM FÜR EINEN ERNTEVORSATZ EINER ERNTEMASCHINE MIT HYDRAULISCHER LEISTUNGSÜBERTRAGUNG**
DRIVE SYSTEM FOR A HARVESTING ATTACHMENT OF A HARVESTING MACHINE WITH HYDRAULIC POWER TRANSMISSION
SYSTÈME D'ENTRAÎNEMENT POUR UNE TÊTE DE RÉCOLTE D'UNE MACHINE DE RÉCOLTE À TRANSMISSION DE PUISSANCE HYDRAULIQUE

(30) Priorität: 02.02.2017 DE 102017201701
(43) Veröffentlichungstag der Anmeldung: 22.08.2018
(73) Patentinhaber: Deere & Company, Moline, IL 61265 (US)
(72) Erfinder: Schmöning, Christoph, 68163 Mannheim (DE); Bohrer, Stefan, 68163 Mannheim (DE)
(74) Vertreter: Holst, Sönke

(56) Entgegenhaltungen:
- EP-A1- 1 133 912
- EP-A1- 1 346 625
- EP-A1- 1 932 417
- EP-A1- 2 018 981
- WO-A1-02/056672
- US-A- 4 009 556
- US-A1- 2010 023 222
- US-B2- 7 748 489

## Beschreibung

Die Erfindung betrifft eine Erntemaschine mit einem Erntevorsatz nach dem Oberbegriff des Anspruchs 1.

### Stand der Technik

Selbstfahrende Erntemaschinen sind üblicherweise mit demontierbaren Erntevorsätzen ausgerüstet, die zum Straßentransport von einem an der Vorderseite der Erntemaschine angebrachten Einzugskanal abgenommen werden und bei Bedarf gegen einen anderen Erntevorsatz zur Ernte einer anderen Fruchtart ausgetauscht werden können. Der Antrieb des Erntevorsatzes erfolgt üblicherweise von der Erntemaschine aus und kann einen rein mechanischen Antriebsstrang zwischen dem Antriebsmotor der Erntemaschine und dem Erntevorsatz vorsehen, oder der Erntevorsatz wird mittels eines Hydraulikmotors angetrieben, der durch eine vom Antriebsmotor der Erntemaschine betriebene Hydropumpe mit unter Druck stehendem Hydraulikfluid beaufschlagt wird.

Im Stand der Technik ist der Hydraulikmotor zum Antrieb beweglicher Elemente des Erntevorsatzes üblicherweise an Bord der Erntemaschine angeordnet und wird durch eine verstellbare Pumpe in einem geschlossenen Hydraulikkreis betrieben (vgl. WO 02/056672 A1). Die Übertragung des Antriebsmoments erfolgt über Gelenkwellen, die manuell beim Anbau des Erntevorsatzes anzubringen sind, oder über Kupplungen (vgl. DE 10 2010 028 605 A1), die sich beim Anbringen des Erntevorsatzes selbsttätig schließen. Es wurde auch vorgeschlagen, die Antriebsleistung mechanisch durch Gelenkwellen von der Erntemaschine auf den Erntevorsatz zu übertragen und dort mittels einer Pumpe in hydraulische Antriebsleistung umzuwandeln, die zum Antrieb einer Pumpe dient (EP 1 055 359 A1), oder eine Hydraulikpumpe an Bord der Erntemaschine vorzusehen, die in einem offenen Kreis mit einem Hydraulikmotor auf dem Erntevorsatz verbunden ist (vgl. DE 199 18 550 A1).

Die als gattungsbildend angesehene EP 1 133 912 A1 beschreibt einen Antrieb einer Haspel eines Schneidwerks in einem geschlossenen hydraulischen Kreis mit einem an Bord des Erntevorsatzes befindlichen Hydraulikmotor und einer lösbaren hydraulischen Kupplungsverbindung zwischen Erntevorsatz und Erntemaschine.

### Aufgabe

Ein geschlossener Hydraulikkreis zum Antrieb des Erntevorsatzes hat den Vorteil, dass die übertragbare Antriebsleistung größer als bei einem offenen Hydraulikkreis sein kann. Bisher wurden derartige, geschlossene Hydraulikkreise stets komplett an Bord der Erntemaschine vorgesehen und die Antriebsleistung des Hydromotors durch einen trennbaren mechanischen Antriebsstrang auf den Erntevorsatz übertragen, oder die mechanisch auf den Erntevorsatz übertragene Antriebsleistung wird durch einen ausschließlich an Bord des Erntevorsatzes angeordneten, geschlossenen Hydraulikkreis übertragen.

Die der Erfindung zu Grunde liegende Aufgabe wird darin gesehen, ein Antriebssystem für einen Erntevorsatz einer Erntemaschine und eine entsprechende Erntemaschine mit einem Erntevorsatz bereitzustellen, das bzw. die keine mechanische Antriebsverbindung zwischen der Erntemaschine und dem Erntevorsatz benötigt, aber dennoch eine Übertragung einer hinreichend großen Antriebsleistung ermöglicht.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntemaschine mit einem Erntevorsatz umfasst ein Antriebssystem für den Erntevorsatz. Das Antriebssystem umfasst einen Antriebsmotor und einen zwischen den Antriebsmotor und einem oder mehreren angetriebenen Elementen des Erntevorsatzes geschalteten Antriebsstrang mit einer an Bord der Erntemaschine angeordneten, verstellbaren Hydropumpe und einem in einem geschlossenen Kreis mit der Hydropumpe verbundenen Hydromotor, der am Erntevorsatz angebracht ist und durch lösbare hydraulische Kupplungsverbindungen mit der Hydropumpe verbunden ist.

Auf diese Weise erübrigen sich mechanische Antriebsmittel für den Erntevorsatz, die zwischen dem Hydromotor und den angetriebenen Elemente des Erntevorsatzes bereitzustellen wären, denn der Hydromotor wird seitens des Erntevorsatzes angebracht. Die lösbaren hydraulischen Kupplungsverbindungen erlauben es, den Erntevorsatz bei Bedarf von der Erntemaschine zu trennen.

Die von der Hydropumpe zum Hydromotor hinlaufende Leitung kann eine erste Kupplungsverbindung und die vom Hydromotor zur Hydropumpe rücklaufende Leitung kann eine zweite Kupplungsverbindung enthalten, wobei die erste und zweite Kupplungsverbindung erntevorsatzseitig und erntemaschinenseitig jeweils an einem gemeinsamen Halter angebracht sind. Dadurch können die Kupplungsverbindungen rasch und einfach getrennt und zusammengeführt werden.

Der Erntevorsatz ist mit einer durch die Erntemaschine auslesbaren Kennzeichnung versehen, die einer Steuereinrichtung zuführbar ist, die im Fall, das anhand einer der Kennzeichnung zugeordneten Information erkennbar ist, dass der Erntevorsatz einen Hydromotor zum Antrieb des Erntevorsatzes enthält, betreibbar ist, ein zwischen der Hydropumpe und dem Hydromotor angeordnetes Ventil zu öffnen.

Seitens der Erntemaschine kann weiterhin ein erntemaschinenseitiger Hydromotor vorhanden sein, mit dem ein nicht mit einem Hydromotor ausgestatteter Erntevorsatz antreibbar ist.

Die Steuereinrichtung kann betreibbar sein, ein zwischen der Hydropumpe und dem Hydromotor angeordnetes Ventil in eine den erntemaschinenseitigen Hydromotor mit der Hydropumpe verbindende Stellung zu verbringen oder den als Verstellmotor ausgeführten, erntemaschinenseitigen Hydromotor in eine Nullstellung zu kommandieren, falls der Erntevorsatz nicht mit einer Kennzeichnung versehen ist, die darauf hinweist, dass der Erntevorsatz mit einem Hydromotor versehen ist. Auch kann die Kennzeichnung weitere Betriebsdaten des Erntevorsatzes, wie maximales Antriebsmoment oder angemessene Drehzahlen, enthalten, die von der Steuereinrichtung ausgelesen und berücksichtigt werden können.

Bei einer anderen Ausführungsform können der erntemaschinenseitige Hydromotor und auch das Ventil entfallen. Dann wären alle mit der Erntemaschine zu benutzenden Erntevorsätze mit einem Hydromotor auszustatten.

Die erntemaschinenseitigen Kupplungsverbindungen können durch das Ventil in dessen den erntemaschinenseitigen Hydromotor mit der Hydropumpe verbindender Stellung von der Hydropumpe getrennt sein.

Der Erntevorsatz kann ein Aufnehmer mit einer Querförderschnecke und einem Zinkenrotor sein. Der Antrieb der Querförderschnecke kann durch den Hydromotor erfolgen. Der Hydromotor kann innerhalb der Querförderschnecke angeordnet und/oder als Radialkolbenmotor ausgeführt sein. Der Antrieb des Zinkenrotors kann über ein hydrostatisches Getriebe erfolgen, das durch die Querförderschnecke antreibbar ist.

### Ausführungsbeispiel

Anhand der Abbildungen wird ein Ausführungsbeispiel der Erfindung erläutert. Es zeigen:
- Fig. 1: eine schematische seitliche Ansicht einer selbstfahrenden Erntemaschine in Form eines Feldhäckslers, und
- Fig. 2: eine schematische Draufsicht auf das Antriebssystem des Erntevorsatzes der Erntemaschine und die zugehörige Hydraulik.

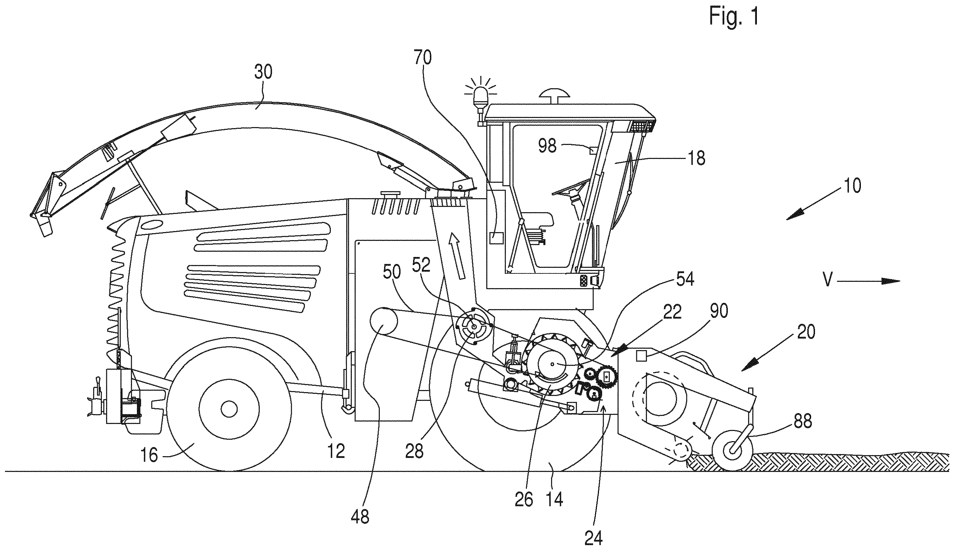

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 einsehbar ist. Der von der Erntemaschine 10 betriebsmäßig trennbare Erntevorsatz 20 ist in der dargestellten Ausführungsform als Aufnehmer ausgeführt und umfasst eine Querförderschnecke 74, einen davor angeordneten Zinkenrotor 84 sowie Stützräder 88 und einen Niederhalter 92 oberhalb des Zinkenrotors 84.

Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseleinrichtung 26 in Form einer Häckseltrommel zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsrichtung V der Erntemaschine 10, die in der Figur 1 nach rechts verläuft.

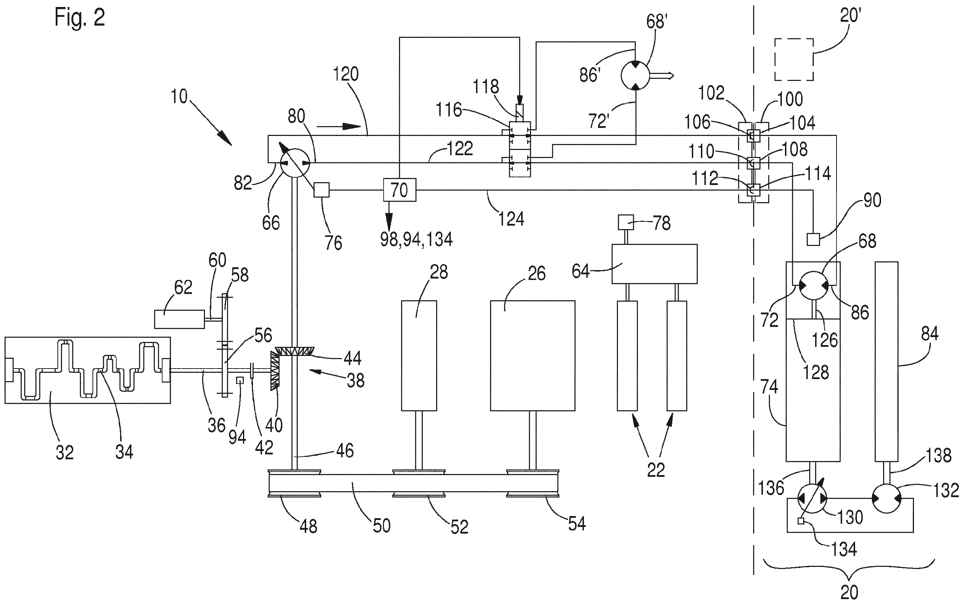

Die Figur 2 zeigt eine Draufsicht auf die Antriebsanordnung der Erntemaschine 10 und des Erntevorsatzes 20. Im rückwärtigen Bereich der Erntemaschine 10 befindet sich ein als Antriebsmotor 32 dienender Verbrennungsmotor insbesondere in Form eines Dieselmotors, der mit Längsträgern und/oder Querträgern des Rahmens 12 verbunden ist. Der Verbrennungsmotor 32 erstreckt sich in der Vorwärtsrichtung der Erntemaschine 10 bis etwa zum rückwärtigen Ende des Rahmens 12 und umfasst eine Kurbelwelle 34, die sich nach vorn aus dem Gehäuse des Verbrennungsmotors 32 heraus erstreckt. Die Kurbelwelle 34 treibt eine sich horizontal und nach vorn erstreckende Ausgangswelle 36 an.

Die Ausgangswelle 36 ist an ihrem vorderen Ende mit einem Winkelgetriebe 38 verbunden, das sich aus einem ersten Kegelzahnrad 40, welches über eine Kupplung 42 mit der Längswelle 36 verbunden ist, und aus einem zweiten Kegelzahnrad 44 zusammensetzt, das mit dem ersten Kegelzahnrad 40 kämmt. Die Drehachse des zweiten Kegelzahnrads 44 erstreckt sich horizontal und quer zur Vorwärtsrichtung. Das zweite Kegelzahnrad 44 ist mit einer Welle 46 verbunden, die eine Riemenscheibe 48 antreibt. Die Riemenscheibe 48 wird von einem Treibriemen 50 umschlungen, der auch eine Riemenscheibe 52 für den Antrieb der Fördereinrichtung 28 und eine Riemenscheibe 54 zum Antrieb der Häckseleinrichtung 26 umschlingt. Das Winkelgetriebe 38, die Welle 46, die Riemenscheiben 48 und 54 und der Triebriemen 50 bilden einen Antriebsstrang, der die Ausgangswelle 36 mit der Häckseleinrichtung 26 verbindet.

Die Längswelle 36 trägt zwischen der Kupplung 42 und dem Gehäuse des Verbrennungsmotors 32 zusätzlich ein am Umfang verzahntes Zahnrad 56, das mit einem weiteren Zahnrad 58 kämmt, welches über eine Welle 60 ein Pumpenaggregat 62 antreibt, das zur Versorgung der Hydromotoren zum Antrieb der Räder 14, 16, eines über ein Getriebe 64 zum Antrieb des Einzugsförderers 22 dienenden Hydromotors 78 und anderer hydraulisch angetriebener Komponenten der Erntemaschine 10 dient. Einzelheiten zu einem möglichen Antrieb des Hydromotors 78, dessen Pumpe ebenfalls durch die Welle 46 angetrieben werden könnte, lassen sich der DE 10 2013 214 986 A1 und dem dort zitierten Stand der Technik entnehmen.

Die Welle 46 steht in der dargestellten Ausführungsform permanent mit einer Hydropumpe 66 mit verstellbarer Verdrängung und Flussrichtung in Antriebsverbindung. Die Hydropumpe 66 ist hydraulikfluidleitend in einem geschlossenen Kreis mit einem Hydromotor 68 verbunden, der ein festes Schluckvolumen aufweist und zum Antrieb der angetriebenen Elemente des Erntevorsatzes 20 dient, bei dem es sich auch um einen Mähvorsatz zur Maisernte oder Erzeugung von Ganzpflanzensilage handeln könnte. In diesem Fall würde der Hydromotor 68 (oder mehrere Hydromotoren 68) zum Antrieb von Mäheinrichtungen und Fördermitteln für das Erntegut dienen.

Ein Auslass 82 der Hydropumpe 66 und ein Einlass 86 des Hydromotors 68 sind durch eine erste Druckleitung 120 untereinander verbunden. Ein Einlass 80 der Hydropumpe 66 und ein Auslass 72 des Hydromotors 68 sind durch eine zweite Druckleitung 122 untereinander verbunden. Der Hydromotor 68 und die Hydropumpe 66 werden in einem geschlossenen Kreis betrieben, der die Übertragung von hinreichend großem Druck und ausreichender Flussrate des Hydrofluids und somit einer hinreichenden Antriebsleistung zum Antrieb der beweglichen Elemente des Erntevorsatzes 20 ermöglicht.

Der Hydromotor 68 befindet sich an Bord des Erntevorsatzes 20. Um beim Abbau des Erntevorsatzes 20 die Druckleitungen 120 und 122 trennen zu können, sind lösbare Kupplungsverbindungen in den Druckleitungen 120, 122 vorgesehen, die jeweils eine Kupplung 104 und 108 seitens der Erntemaschine 10 und einen Stecker 106 und 110 seitens des Erntevorsatzes 20 umfassen. Die Stecker 106, 110 sind erntevorsatzseitig in einer Halterung 100 zusammengefasst. Die Kupplungen 104, 108 sind erntemaschinenseitig in einer Halterung 102 zusammengefasst. Die Halterungen 100, 102 können insbesondere als so genannter Multikuppler (s. EP 1 346 625 A1) ausgeführt sein und ermöglichen es, beide Druckleitungen 120 und 122 gleichzeitig zu trennen oder zu verbinden. Es kann zusätzlich noch eine Leckölleitung (nicht gezeigt) über die Halterungen 100, 102 geführt werden.

Seitens des Erntevorsatzes 20 ist eine Speichereinrichtung 90 vorgesehen, die über eine Leitung 124 mit einer Steuereinrichtung 70 verbunden ist. Die Leitung 124 umfasst einen Stecker 112 und eine Kupplung 114, die ebenfalls jeweils in die Halterung 100 oder 102 integriert sind und mit diesen verbunden oder getrennt werden.

Der Hydromotor 68 dient zum Antrieb der Querförderschnecke 74. Der Hydromotor 68 kann als Radialkolbenmotor ausgeführt sein. Derartige Radialkolbenmotoren ermöglichen Drehzahlen, die ohne Zwischenschaltung eines Übersetzungsgetriebes zum Antrieb der Querförderschnecke 74 geeignet sind. Die Ausgangswelle 126 des Hydromotors 68 ist daher direkt über einen Flansch 128 mit der Innenwand des hohlen Innenraums der Querförderschnecke 74 verbunden. Der Hydromotor 68 ist in der dargestellten Ausführungsform innerhalb des hohlen Innenraums der Querförderschnecke 74 angeordnet, könnte aber auch außerhalb des hohlen Innenraums angebracht werden. Es wäre jedoch auch denkbar, die Querförderschnecke 74 durch einen Axialkolbenmotor anzutreiben und bei Bedarf ein Getriebe zur Drehzahländerung (insbesondere Untersetzung) zwischen dem Axialkolbenmotor und der Querförderschnecke 74 vorzusehen. Auch der Axialkolbenmotor und ggf. das Getriebe können im hohlen Innenraum der Querförderschnecke 74 angebracht werden.

Der Antrieb des Zinkenrotors 84 erfolgt über ein an Bord des Erntevorsatzes 20 angeordnetes, hydrostatisches Getriebe mit einer zweiten Hydropumpe 130 und einem zweiten Hydromotor 132. Die Antriebswelle der zweiten Hydropumpe 130 ist mit der Querförderschnecke 74 gekoppelt. Die Ausgangswelle 138 des zweiten Hydromotors 132 ist mit dem Zinkenrotor 84 gekoppelt. Anders als zeichnerisch in der Figur 2 dargestellt, könnte die zweite Hydropumpe 130 und/oder der zweite Hydromotor 132 auch innerhalb des hohlen Innenraums der Querförderschnecke 74 bzw. des Zinkenrotors 84 angeordnet sein. Die zweite Hydropumpe 130 ist mit dem zweiten Hydromotor 132 in einem geschlossenen Kreis verbunden. Das Fördervolumen der zweiten Hydropumpe 130 ist mittels eines Aktors verstellbar, der über eine weitere, über die Halterungen 100 und 102 geführte und dort trennbare Leitung (nicht gezeigt) mit der Steuereinrichtung 70 verbunden sein kann. Die Speichereinheit 90 und/oder der Aktor 134 kann mit der Steuereinrichtung 70 insbesondere über ein Bussystem verbunden werden.

Die Steuereinrichtung 70 steuert einen Aktor 76 an, der die Flussrate und Flussrichtung der Hydropumpe 66 beeinflusst. Schließlich ist die Steuereinrichtung 70 mit einem Aktor 94, der die Kupplung 42 öffnet und schließt, und mit einer in der Fahrerkabine 18 angeordneten Bedienereingabeeinrichtung 98 mit integrierter Anzeigeeinheit verbunden.

Die Bedienereingabeeinrichtung 98 ermöglicht es dem Bediener, einen (Straßen-) Fahrbetrieb auszuwählen, in dem die Kupplung 42 geöffnet ist und weder die Häckseleinrichtung 26 noch der Einzugsförderer 22 angetrieben wird, da dann auch der weitere Hydromotor 78 nicht angetrieben wird. Auch die Hydropumpe 66 und somit die angetriebenen Elemente (Querförderschnecke 74 und Zinkenrotor 84) des Erntevorsatzes 20 stehen wegen der geöffneten Kupplung 42 still. Die Räder 14 und ggf. (bei Allradantrieb) auch 16 werden über ihre Hydromotore und das Pumpenaggregat 62 angetrieben.

Weiterhin ermöglicht die Bedienereingabeeinrichtung 98 dem Bediener, eine erste Betriebsart (Erntebetrieb) auszuwählen, in dem die Kupplung 42 geschlossen ist und die Häckseleinrichtung 26 und die Fördervorrichtung 28 über den Triebriemen 50 angetrieben werden. Die Welle 46 treibt dann auch die Hydropumpe 66 an, welche über die erste Druckleitung 120 den Hydromotor 68 beaufschlagt, der wiederum die Querförderschnecke 74 des Erntevorsatzes 20 und über das hydrostatische Getriebe mit der zweiten Hydropumpe 130 und dem zweiten Hydromotor 132 den Zinkenrotor 84 antreibt. Der Einzugsförderer 22 wird dann vom Pumpenaggregat 62 über den weiteren Hydromotor 78 angetrieben. Der Aktor 76 wird durch die Steuereinrichtung 70 derart angesteuert, dass sich eine gewünschte Einzugsgeschwindigkeit des Erntevorsatzes 20 ergibt, die durch die Bedienereingabeeinrichtung 98 eingegeben werden kann oder selbsttätig durch die Steuerung anhand von Messwerten von Sensoren vorgegeben wird, die Eigenschaften des Ernteguts erfassen, wie Feuchtigkeit oder Verdichtbarkeit, oder durch in der Speichereinrichtung 90 abgelegte Daten definiert wird. Analog wird der Aktor 134 durch die Steuereinrichtung 70 derart angesteuert, dass der Zinkenrotor 84 mit einer gewünschten Geschwindigkeit angetrieben wird.

In der ersten Betriebsart strömt das Hydraulikfluid vom Auslass 82 der Hydropumpe 66 durch die Druckleitung 120 zum Einlass 86 des Hydromotors 68 und von dessen Auslass 72 durch die zweite Druckleitung 122 zum Einlass 80 der Hydropumpe 66. Die Begriffe Einlass und Auslass beziehen sich demnach auf die Flussrichtung des Hydraulikfluids im Erntebetrieb, die auch durch den Pfeil in der Figur 2 repräsentiert wird.

Die Bedienereingabeeinrichtung 98 ermöglicht auch die Auswahl einer zweiten Betriebsart (eines Reversiermodus), in dem der Erntevorsatz 20 in gegenüber dem Erntebetrieb umgekehrter Richtung angetrieben wird. Dann veranlasst die Steuereinrichtung 70 den Aktor 76, die Taumelscheibe der Hydropumpe 66 in eine Position zu verbringen, in welcher die Hydropumpe 66 Hydraulikfluid durch die zweite Druckleitung 122 zum Hydromotor 68 fördert, welches dann durch die erste Druckleitung 120 zurück zur Hydropumpe 66 fließt. Die zweite Hydropumpe 130 wird dann gegenüber der ersten Betriebsart in umgekehrter Drehrichtung angetrieben, sodass sich auch der zweite Hydromotor 132 in einer gegenüber der ersten Betriebsart umgekehrten Drehrichtung dreht und den Zinkenrotor 84 reversiert.

Der Steuereinrichtung 70 wird von der elektronischen Speichereinheit 90 des Erntevorsatzes 20 eine dort abgelegte Information zugeführt, die besagt, ob der jeweils mit der Erntemaschine 10 gekoppelte Erntevorsatz 20 einen Hydromotor 68 besitzt oder nicht. Besitzt der Erntevorsatz 20 einen Hydromotor 68, wie in der dargestellten Ausführungsform des Erntevorsatzes 20, bringt die Steuereinrichtung 70 ein in die Druckleitungen 120, 122 eingefügtes Ventil 116 mittels eines Aktors 118 in eine die Hydropumpe 66 mit dem Hydromotor 68 verbindende Stellung, wie sie in der Figur 2 gezeigt ist. Anderenfalls wird die Steuereinrichtung 70 das Ventil 116 in eine zweite Stellung verbinden, in welcher die Hydropumpe 66 von den Kupplungen 104 und 108 und somit vom Hydromotor 68 getrennt ist. Stattdessen wird die Hydropumpe 66 in der zweiten Stellung des Ventils 116 mit einem erntemaschinenseitigen Hydromotor 68' verbunden, der sich an Bord der Erntemaschine 10 befindet und zum Antrieb eines Erntevorsatzes 20' dient, der nicht mit einem eigenen Hydromotor 68 ausgestattet ist. Der erntemaschinenseitige Hydromotor 68' wird über konventionelle, mechanische Antriebsmittel (Kupplung und/oder Gelenkwelle) antriebsmäßig mit dem Erntevorsatz 20' verbunden.

Es sei noch angemerkt, dass das Ventil 116 entfallen könnte, wenn der erntemaschinenseitige Hydromotor 86' als Verstellmotor ausgeführt ist und durch einen zugehörigen Aktor von der Steuereinrichtung 70 im Falle eines anhand der mit der Steuereinrichtung 70 elektrisch verbundenen Speichereinheit 90 erkanntem, hydraulisch angetriebenem Erntevorsatz 20 in eine Nullstellung verbracht wird.

## Patentansprüche

1. Erntemaschine (10) mit einem Erntevorsatz (20) und einem Antriebssystem für den Erntevorsatz (20), welches einen Antriebsmotor (32) und einen zwischen den Antriebsmotor (32) und einem oder mehreren angetriebenen Elementen des Erntevorsatzes (20) geschalteten Antriebsstrang mit einer an Bord der Erntemaschine (10) angeordneten, verstellbaren Hydropumpe (66) und einem in einem geschlossenen Kreis mit der Hydropumpe verbundenen Hydromotor (68) umfasst, wobei der Hydromotor (68) am Erntevorsatz (20) angebracht und durch lösbare hydraulische Kupplungsverbindungen mit der Hydropumpe (66) verbunden ist, **dadurch gekennzeichnet, dass** der Erntevorsatz (20) mit einer durch eine Steuereinrichtung (70) der Erntemaschine (10) auslesbaren Kennzeichnung versehen ist, und dass die Steuereinrichtung (70) betreibbar ist, im Fall, dass anhand einer der Kennzeichnung zugeordneten Information erkennbar ist, dass der Erntevorsatz (20) einen Hydromotor (68) zum Antrieb des Erntevorsatzes (20) enthält, betreibbar ist, ein zwischen der Hydropumpe (66) und dem Hydromotor (68) angeordnetes Ventil (116) zu öffnen.

2. Erntemaschine (10) mit einem Erntevorsatz (20) nach Anspruch 1, wobei die von der Hydropumpe (66) zum Hydromotor (68) hinlaufende Druckleitung (120) eine erste Kupplungsverbindung und die vom Hydromotor (68) zur Hydropumpe (66) rücklaufende Druckleitung (122) eine zweite Kupplungsverbindung enthält und die erste und zweite Kupplungsverbindung erntevorsatzseitig und erntemaschinenseitig jeweils an einem gemeinsamen Halter (100, 102) angebracht sind.

3. Erntemaschine (10) mit einem Erntevorsatz (20) nach einem der vorhergehenden Ansprüche, wobei seitens der Erntemaschine (10) ein erntemaschinenseitiger Hydromotor (68') vorhanden ist, der über mechanische Antriebsmittel antriebsmäßig mit einem nicht mit einem Hydromotor (68) ausgestatteten Erntevorsatz (20') verbindbar ist.

4. Erntemaschine (10) mit einem Erntevorsatz (20) nach Anspruch 3, wobei die Steuereinrichtung (70) betreibbar ist, ein zwischen der Hydropumpe (66) und dem Hydromotor (68) angeordnetes Ventil (116) in eine den erntemaschinenseitigen Hydromotor (68') mit der Hydropumpe (66) verbindende Stellung zu verbringen oder den als Verstellmotor ausgeführten, erntemaschinenseitigen Hydromotor (68') in eine Nullstellung zu kommandieren, falls der Erntevorsatz (20) nicht mit einer Kennzeichnung versehen ist.

5. Erntemaschine (10) mit einem Erntevorsatz (20) nach Anspruch 4, wobei die erntemaschinenseitigen Kupplungsverbindungen durch das Ventil (116) in dessen den erntemaschinenseitigen Hydromotor (68') mit der Hydropumpe (66) verbindender Stellung von der Hydropumpe (66) getrennt sind.

6. Erntemaschine (10) mit einem Erntevorsatz (20) nach einem der Ansprüche 1 bis 5, wobei die Erntemaschine (10) ein Feldhäcksler ist.

7. Erntemaschine (10) mit einem Erntevorsatz (20) nach einem der Ansprüche 1 bis 6, wobei der Erntevorsatz (20) ein Aufnehmer mit einer Querförderschnecke (74) und einem Zinkenrotor (84) ist und der Hydromotor (68) antriebsmäßig mit der Querförderschnecke (74) gekoppelt ist.

8. Erntemaschine (10) mit einem Erntevorsatz (20) nach Anspruch 7, wobei der Hydromotor (68) innerhalb der Querförderschnecke (74) angeordnet und/oder als Radialkolbenmotor ausgeführt ist.

9. Erntemaschine (10) mit einem Erntevorsatz (20) nach Anspruch 7 oder 8, wobei der Antrieb des Zinkenrotors (84) über ein hydrostatisches Getriebe erfolgt, das durch die Querförderschnecke (74) antreibbar ist.

## Claims

1. Harvesting machine (10) having a harvesting attachment (20) and a drive system for the harvesting attachment (20), which drive system comprises a drive motor (32) and a drive train, which is connected between the drive motor (32) and one or more driven elements of the harvesting attachment (20) and has an adjustable hydraulic pump (66) arranged onboard on the harvesting machine (10) and a hydraulic motor (68) which is connected to the hydraulic pump in a closed circuit, wherein the hydraulic motor (68) is attached to the harvesting attachment (20) and is connected to the hydraulic pump (66) by releasable hydraulic coupling connections, **characterized in that** the harvesting attachment (20) is provided with a marking which can be read by a control device (70) of the harvesting machine (10), and **in that**, in the event that it can be identified with reference to information assigned to the marking that the harvesting attachment (20) contains a hydraulic motor (68) for driving the harvesting attachment (20), the control device (70) can be operated to open a valve (116) arranged between the hydraulic pump (66) and the hydraulic motor (68).

2. Harvesting machine (10) having a harvesting attachment (20) according to Claim 1, wherein the pressure line (120) running from the hydraulic pump (66) to the hydraulic motor (68) contains a first coupling connection, and the pressure line (122) returning from the hydraulic motor (68) to the hydraulic pump (66) contains a second coupling connection, and the first and second coupling connections are each attached on the harvestingattachment side and harvesting-machine side to a common holder (100, 102).

3. Harvesting machine (10) having a harvesting attachment (20) according to either of the preceding claims, wherein there is a harvesting-machine-side hydraulic motor (68') on the harvesting machine (10), which hydraulic motor is connectable in terms of drive via mechanical drive means to a harvesting attachment (20') which is not equipped with a hydraulic motor (68).

4. Harvesting machine (10) having a harvesting attachment (20) according to Claim 3, wherein the control device (70) can be operated to bring a valve (116) arranged between the hydraulic pump (66) and the hydraulic motor (68) into a position connecting the harvesting-machine-side hydraulic motor (68') to the hydraulic pump (66), or to command the harvesting-machine-side hydraulic motor (68'), which is in the form of a variable displacement motor, into a zero position if the harvesting attachment (20) is not provided with a marking.

5. Harvesting machine (10) having a harvesting attachment (20) according to Claim 4, wherein the harvesting-machine-side coupling connections are disconnected from the hydraulic pump (66) by the valve (116) in the position thereof connecting the harvesting-machine-side hydraulic motor (68') to the hydraulic pump (66).

6. Harvesting machine (10) having a harvesting attachment (20) according to one of Claims 1 to 5, wherein the harvesting machine (10) is a forage harvester.

7. Harvesting machine (10) having a harvesting attachment (20) according to one of Claims 1 to 6, wherein the harvesting attachment (20) is a pick-up with a transverse conveying auger (74) and a spike rotor (84), and the hydraulic motor (68) is coupled in terms of drive to the transverse conveying auger (74) .

8. Harvesting machine (10) having a harvesting attachment (20) according to Claim 7, wherein the hydraulic motor (68) is arranged within the transverse conveying auger (74) and/or is designed as a radial piston motor.

9. Harvesting machine (10) having a harvesting attachment (20) according to Claim 7 or 8, wherein the spike rotor (84) is driven via a hydrostatic gearing which can be driven by the transverse conveying auger (74).

## Revendications

1. Machine de récolte (10), dotée d'une tête de récolte (20) et d'un système d'entraînement pour la tête de récolte (20) qui comprend un moteur d'entraînement (32) et une chaîne cinématique connectée entre le moteur d'entraînement (32) et un ou plusieurs éléments entraînés de la tête de récolte (20), avec une pompe hydraulique réglable (66) disposée à bord de la machine de récolte (10) et un moteur hydraulique (68) relié à la pompe hydraulique dans un circuit fermé, le moteur hydraulique (68) étant fixé à la tête de récolte (20) et étant relié à la pompe hydraulique (66) par des coupleurs hydrauliques amovibles, **caractérisée en ce que** la tête de récolte (20) est munie d'une identification lisible par un dispositif de commande (70) de la machine de récolte (10), et **en ce que** le dispositif de commande (70), si une information associée à l'identification permet de savoir que la tête de récolte (20) comprend un moteur hydraulique (68) pour entraîner la tête de récolte (20), le dispositif de commande peut être actionné pour ouvrir une soupape (116) disposée entre la pompe hydraulique (66) et le moteur hydraulique (68).

2. Machine de récolte (10) dotée d'une tête de récolte (20) selon la revendication 1, dans laquelle la conduite sous pression (120) allant de la pompe hydraulique (66) au moteur hydraulique (68) comprend un premier coupleur, et la conduite sous pression (122) revenant du moteur hydraulique (68) à la pompe hydraulique (66) comprend un deuxième coupleur, et le premier et le deuxième coupleur étant respectivement fixés côté tête de récolte et côté machine de récolte à un support commun (100, 102).

3. Machine de récolte (10) dotée d'une tête de récolte (20) selon l'une quelconque des revendications précédentes, dans laquelle il existe du côté de la machine de récolte (10) un moteur hydraulique côté machine de récolte (68') qui peut être relié en termes d'entraînement par des moyens d'entraînement mécaniques à une tête de récolte (20') sans moteur hydraulique (68) .

4. Machine de récolte (10) dotée d'une tête de récolte (20) selon la revendication 3, dans laquelle le dispositif de commande (70) peut être actionné pour amener une soupape (116) disposée entre la pompe hydraulique (66) et le moteur hydraulique (68) dans une position reliant le moteur hydraulique côté machine de récolte (68') à la pompe hydraulique (66), ou bien pour commander le moteur hydraulique côté machine de récolte (68'), réalisé sous forme de moteur de réglage, dans une position zéro, si la tête de récolte (20) n'est munie d'aucune identification.

5. Machine de récolte (10) dotée d'une tête de récolte (20) selon la revendication 4, dans laquelle les coupleurs côté machine de récolte sont séparés de la pompe hydraulique (66) par la soupape (116) dans sa position reliant le moteur hydraulique côté machine de récolte (68') à la pompe hydraulique (66).

6. Machine de récolte (10) dotée d'une tête de récolte (20) selon l'une quelconque des revendications 1 à 5, dans laquelle la machine de récolte (10) est une ramasseuse-hacheuse.

7. Machine de récolte (10) dotée d'une tête de récolte (20) selon l'une quelconque des revendications 1 à 6, dans laquelle la tête de récolte (20) est un ramasseur doté d'une vis sans fin transversale (74) et d'un rotor à dents (84), et le moteur hydraulique (68) est couplé en entraînement à la vis sans fin transversale (74).

8. Machine de récolte (10) dotée d'une tête de récolte (20) selon la revendication 7, dans laquelle le moteur hydraulique (68) est disposé à l'intérieur de la vis sans fin transversale (74) et/ou est réalisé sous forme de moteur à pistons radiaux.

9. Machine de récolte (10) dotée d'une tête de récolte (20) selon la revendication 7 ou 8, dans laquelle l'entraînement du rotor à dents (84) est effectué par l'intermédiaire d'une transmission hydrostatique qui peut être entraînée par la vis sans fin transversale (74).
